# FASCICULE DE BREVET EUROPEEN

(11) **EP 1 062 452 B1**
(45) Date de publication et mention de la délivrance du brevet: **28.05.2003**
(21) Numéro de dépôt: 99934331.2
(22) Date de dépôt: 17.02.1999
(51) Int. Cl.: F16L 11/10, F16L 11/08

(54) **CONDUITE FLEXIBLE POUR UNE UTILISATION STATIQUE EN AMBIANCE CORROSIVE**
FLEXIBLE ROHRLEITUNG UND SEINE STATISCHE VERWENDUNG IN EINER KORROSIVEN UMGEBUNG
FLEXIBLE CONDUIT FOR STATIC USE IN A CORROSIVE ENVIRONMENT

(30) Priorité: 18.02.1998 FR 9801944
(43) Date de publication de la demande: 27.12.2000
(73) Titulaire: Institut Francais du Petrole, 92852 Rueil-Malmaison Cedex (FR)
(72) Inventeur: JUNG, Patrice, F-76940 La Mailleraye sur Seine (FR); MALLEN HERRERO, José, F-75008 Paris (FR); LEROY, Jean-Marc, F-92500 Rueil-Malmaison (FR); LONGAYGUE, Xavier, F-78590 Noisy le Grand (FR)
(86) Numéro de dépôt international: FR9900361
(87) Numéro de publication internationale: WO99042754

(56) Documents cités:
- WO-A-91/16461
- FR-A- 2 731 371
- US-A- 4 867 205
- US-A- 5 645 109

## Description

L'invention concerne une structure optimisée d'une conduite flexible renforcée par des armures métalliques adaptée au transport d'effluents sous pression contenant de l'H₂S. La présente invention convient aux flexibles du type « flow line », c'est-à-dire des conduites flexibles déroulées à partir d'un bateau pour être posées sur le fond de la mer et connectées entre des têtes de puits et/ou des installations de collectes sous-marines. L'invention concerne plus particulièrement le domaine de l'offshore profond où les contraintes de traction sur la conduite lors de sa pose sur le fond sont importantes, mais où les contraintes dues à la pression sont prépondérantes lorsque la conduite est en service, puisqu'elle est alors posée sur le fond de la mer.

La méthode de conception actuelle des flexibles consiste à déterminer la structure d'une conduite flexible en combinant une ou plusieurs gaines d'étanchéité aux gaz ou aux liquides transportés, avec des nappes d'armures destinées à résister aux efforts, c'est-à-dire, à la pression interne, à la pression externe, ainsi qu'aux efforts de traction résultant du poids de la conduite ou de la pression interne.

On pourra se référer aux documents API RP 17B (Recommended Practices) et SPEC 17J (Specification) qui ont pour objet les conduites flexibles.

D'une manière générale, une conduite flexible comporte, de l'intérieur vers l'extérieur, une carcasse constituée par exemple d'un feuillard agrafé, une gaine d'étanchéité en polymère, au moins une armure de pression constituée par des fils de forme agrafés enroulés selon une spirale à faible pas, au moins une couche de fil d'armures de traction enroulés selon une spirale à pas long. Cette configuration est dénommée « rough bore ».

Une variante de conduite flexible peut comporter une gaine d'étanchéité interne, une première armure résistant principalement à la pression développée par le fluide dans la gaine interne, généralement appelée voûte de pression, éventuellement une deuxième armure résistant principalement à la traction produite notamment par la pression du fluide. Cette variante est dénommée « smooth bore ».

Dans une autre variante, certains flexibles comportent une armure, disposée au-dessus de la gaine d'étanchéité, qui résiste à la fois aux effets de traction dirigés longitudinalement et à la composante circonférentielle due à la pression interne du fluide. Une telle armure de pression peut comporter deux nappes de fils à spirales à pas inverse dont les angles d'armage sont voisins de 55°. Les efforts dus à la pression interne est retenue dans ce cas par ces couches.

Le document US-A- 4 867 205 décrit une conduite flexible selon le préambule de la revendication 1.

Dans le cas d'une présence de gaz H₂S dans l'effluent transporté par une conduite flexible, la qualité des aciers servant à la fabrication de tous les fils d'armures, ainsi que les traitements mécaniques et thermiques effectués sur ces fils (notamment écrouissage à la mise en forme, puis éventuellement recuit) doivent être choisis de façon telle que ces fils apportent conjointement la résistance mécanique nécessaire en service et à la pose, et la résistance à la corrosion en présence d'H₂S. Pour cela, on est conduit à utiliser des aciers ayant des qualités mécaniques relativement faibles, ou des aciers de composition spécifique combinés avec des traitements thermiques adaptés. Dans le premier cas, cela conduit à des poids d'acier pénalisant, dans l'autre cas, souvent à des coûts de fabrication plus importants. On peut citer en référence les documents WO-91/16461 et WO-96/28575.

La présente invention est basée sur le concept d'une structure de flexible comportant des armures fabriquées en fils dits « H₂S » de façon à respecter les critères connus en ambiance H₂S, et des fils d'armures fabriquées en matériau ne répondant pas aux critères de résistance à l'H₂S. L'invention concerne également une méthode pour la conception d'une structure de flexible adaptée à l'application en ambiance H₂S, méthode dans laquelle on détermine un niveau de contrainte dans les fils de renfort en deçà duquel l'utilisation d'acier dits « H₂S » n'est pas nécessaire et au delà duquel des aciers dits « H₂S » doivent être utilisés pour fabriquer les fils de renfort.

Un acier dit « H₂S » correspond à des critères bien connus dans la profession. Un de ces critères est la dureté (HRC) de l'acier considéré : en dessous de 22 HRC, il est admis que l'acier est compatible avec une ambiance H₂S. Il existe une équivalence entre la dureté et la résistance à la rupture Rm, dans le cas présent une dureté de 22 HRC correspond à une résistance à la rupture d'environ 775 à 800 MPa. Cette limite à la rupture est associée à une limite d'élasticité de l'acier relativement faible, inférieure ou égale à environ 700 MPa. Un autre critère permet de s'affranchir du critère de dureté qui est suffisant mais pas obligatoirement nécessaire pour certains types d'aciers traités mécaniquement et/ou thermiquement. Un acier sera également dit compatible avec une ambiance H₂S si, selon la norme TM0177-96 (méthode A), on montre qu'il n'y a pas de rupture au bout de trente jours des échantillons représentatifs plongés dans une solution H₂S et mis en charge sous contrainte définie par exemple égale à 90% de la limite d'élasticité R_{p0,2}. Ce test est connu sous la dénomination de SSCC ou « sulfide stress corrosion craking ». Conjointement au test TM0177-96, un autre test dit « HIC » doit être vérifié. Le test selon la norme TM0284-96 est relatif aux effets de fissuration (blistering) induits par l'hydrogène (Hydrogen Induced Craking) présent dans une solution du type A, définie dans la procédure de test. Pour qu'un acier soit compatible avec H₂S, il n'est accepté qu'un très faible endommagement en volume, par exemple de l'ordre du pour cent, de préférence inférieur à 3% de la surface projetée. On pourra se référer aux documents WO-91/16461 et WO-96/28575, déjà cités plus haut, qui décrivent des aciers dits « H₂S ».

Ainsi, la présente invention concerne une conduite tubulaire flexible pour le transport de fluides sous pression contenant de l'H₂S, selon la revendication 1.

La conduite peut comporter une gaine intermédiaire sur l'extérieur de laquelle, par rapport à l'intérieur de la conduite, est disposée la nappe d'armures de résistance à la traction fabriquées à partir de fils d'acier ne respectant pas les critères de tenue à l'H₂S.

La nappe d'armure en acier de résistance aux efforts induits par la différence de pression interne/externe peut comporter au moins des fils de renfort enroulés selon un angle proche de 90° par rapport à l'axe de la conduite.

La nappe d'armure en acier de résistance aux efforts induits par la différence de pression interne/externe peut comporter au moins des fils de renfort enroulés selon un angle proche de 55°.

Dans la variante précédente, la conduite peut comporter en combinaison, de l'intérieur vers l'extérieur, une carcasse, une gaine d'étanchéité, deux nappes d'armures croisées à 55° en acier dit « H₂S », deux nappes d'armures croisées à un angle inférieur à 40° en acier non H₂S.

Dans une autre variante, la conduite selon l'invention peut comporter en combinaison, de l'intérieur vers l'extérieur, une carcasse, une gaine d'étanchéité, une voûte en fils spiralés à une angle proche de 90° et deux nappes d'armures croisées à un angle inférieur à 40° en acier dit « H₂S », et deux nappes d'armures croisées à un angle inférieur à 40° en acier non H₂S.

L'invention concerne également une méthode utilisée pour la conception d'une conduite flexible de type « flowline » pour le transport de fluides sous pression contenant de l'H₂S une fois allongée au fond de la mer, ladite conduite comportant une carcasse, une gaine interne d'étanchéité, au moins une nappe d'armures en acier de résistance aux efforts induits par la différence de pression interne/externe, au moins une nappe d'armures en acier de résistance à la traction enroulées en spirale selon un angle inférieur à 45° par rapport à l'axe de la conduite. La méthode comporte les étapes suivantes :
- on détermine un niveau de contrainte dans un acier non H₂S pouvant être utilisé pour ladite nappe d'armures de résistance à la traction, niveau en deçà duquel l'acier conserve en ambiance H₂S une résistance mécanique suffisante pour relever ladite conduite,
- on dimensionne ladite nappe d'armures en acier de résistance à la traction enroulées en spirale selon un angle inférieur à 45° par rapport à l'axe de la conduite, pour que les contraintes en condition de pression de service dans les fils de ladite nappe de traction soient inférieures audit niveau,
- on fabrique ladite nappe d'armures en acier de résistance à la traction enroulées en spirale selon un angle inférieur à 45° par rapport à l'axe de la conduite, à partir dudit acier ne respectant pas les critères de tenue à l'H₂S.

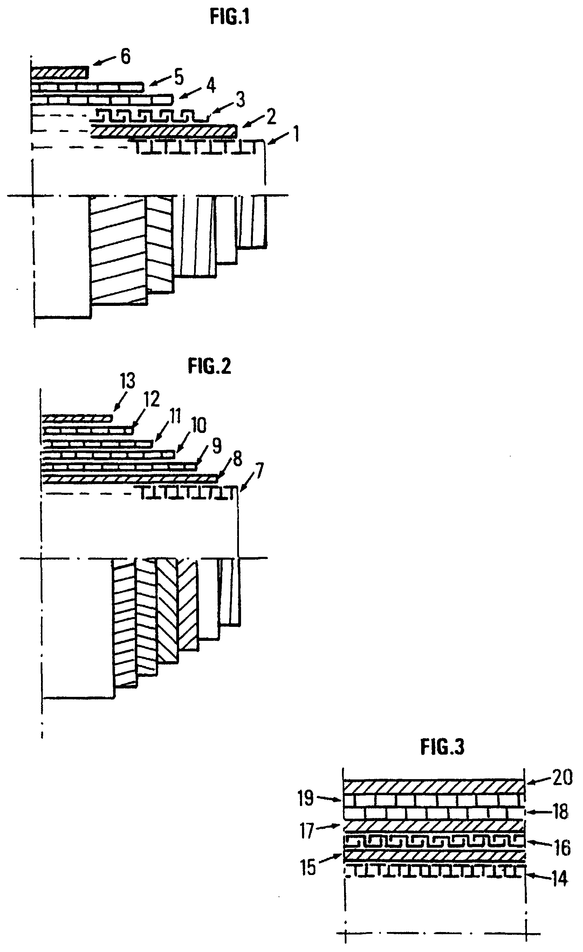

La présente invention sera mieux comprise et ses avantages apparaîtront plus clairement à la lecture des exemples suivants, nullement limitatifs, et illustrés par les figures ci-annexées, parmi lesquelles :
■ la figure 1 montre en coupe une structure de conduite flexible de type avec voûte,
■ la figure 2 montre, également en coupe, une structure de conduite flexible de type sans voûte,
■ la figure 3 montre une variante d'une structure de conduite flexible selon l'invention comportant une gaine intermédiaire spécifique d'étanchéité.

Sur la figure 1, la référence 1 désigne une carcasse, c'est-à-dire une couche tubulaire flexible constituée par au moins deux fils ayant une section en T ou U comportant des nervures latérales pour effectuer un accrochage dans la direction de l'axe de la conduite. Pour cela, les deux fils en T sont disposés tête-bêche, par exemple selon la description contenue dans le document EP-0431142 B1, cité ici en référence. L'angle d'enroulement hélicoïdal est proche de 90° par rapport à l'axe longitudinal de la garniture. Bien entendu, on peut combiner un fil en T avec un fil en U, ou deux fils en U. Une telle carcasse, non étanche aux fluides transportés, a pour fonction d'empêcher l'écrasement de la gaine d'étanchéité lorsque la conduite est en dépression, c'est-à-dire lorsque la pression intérieure est inférieure à la pression extérieure. Les carcasses en U et/ou T permettent d'obtenir une résistance à l'écrasement importante, fonction de l'inertie de la section des fils, dans la limite des possibilités de fabrication. Cependant, des carcasses en feuillard agrafé peuvent convenir dans certains cas, par exemple si le feuillard utilisé est en métal haute résistance ou si la carcasse est du type caisson, comme celle décrite dans le document EP-0494299B1.

La référence 2 indique une gaine en polymère dont la fonction est d'effectuer l'étanchéité de la conduite par rapport au fluide transporté.

La référence 3 désigne une structure de type voûte en fils de forme auto agrafés du type Zéta ou en fils agrafés du type U et/ou T comme pour la carcasse décrite plus haut. Cette structure est formée également par des enroulements hélicoïdaux à faible pas. La fonction principale de la voûte est de résister aux efforts dus à la pression interne, efforts d'éclatement transmis par la gaine d'étanchéité ou/et aux efforts d'écrasement dus à la différence de pression interne/externe transmis par les fils de résistance à la traction.

Les références 4 et 5 désignent les fils d'armures dédiés à la résistance à la traction. Leur section est généralement rectangle, l'angle de la spirale est compris entre 20 et 40° par rapport à l'axe de la conduite. Les deux couches sont enroulées dans des sens opposés.

Une gaine externe en polymère 6 est extrudée à l'extérieur.

La figure 2 illustre un autre type de structure de conduite flexible dit « sans voûte ».

Il comporte comme précédemment une carcasse 7 et une gaine d'étanchéité 8. La couche de résistance à la pression est ici remplacée par deux couches 9 et 10 de fils posés selon une hélice ayant un angle proche de 55°. Les deux couches sont enroulées selon des angles opposés. Dans le cas de pression très élevée, au moins la première couche 9 en contact avec la gaine 8 est constituée de fils agrafés. Ces deux couches 9 et 10 résistent à la différence de pression interne/externe qui génère des contraintes circonférentielles et des contraintes longitudinales.

Les références 11 et 12 désignent deux couches d'armures de résistance à la traction complémentaires aux deux couches précédentes. Ces deux couches de fils de traction sont principalement calculées en fonction des efforts longitudinaux dus à la pose de la conduite flexible de type « Flow Line ». Il apparaît qu'en service, ces armures ne sont plus soumises à des efforts notables.

La figure 3 illustre une variante de la structure de flexible selon la figure 1. Une carcasse 14 est entourée par une gaine en polymère d'étanchéité 15. Une voûte 16, par exemple en fil zéta est bobinée sur la gaine. Cette variante se différencie en ce qu'elle comporte une autre gaine d'étanchéité 17 intermédiaire entre la voûte 16 et les deux couches d'armures de résistance à la traction 18 et 19. La gaine intermédiaire 17 est apte à limiter la propagation du gaz H₂S de l'intérieur de l'espace annulaire où se situent les armures de pression, vers l'extérieur de ladite conduite où se situent les autres armures. Une gaine externe 20 est extrudée à l'extérieur. La présente variante s'applique également à la structure illustrée par la figure 2, une gaine intermédiaire est dans ce cas intercalée entre les armures à 55° (9 et 10) et les armures de traction 11 et 12. Un des avantages de cette variante est de permettre l'utilisation d'aciers à très haute résistance (donc non résistant à la corrosion au gaz H₂S, c'est à dire un acier dit « non H₂S ») d'un coût très modéré pour le groupe d'armures de résistance à la traction situé à l'extérieur de la gaine 17.

La fonction de la gaine intermédiaire 17 dans les deux variantes est de séparer physiquement les armures de résistance à la pression (3 ; 9, 10 ;16), particulièrement chargées en pression de service, des armures plus particulièrement adaptées à la reprise des efforts de pose (4, 5 ;11, 12 ; 18, 19), donc peu chargées en service, afin de limiter la teneur en gaz corrosif dans l'annulaire défini par la gaine intermédiaire 17 et la gaine externe 20 ou 13. Il est clair que la présence de cette gaine intermédiaire n'est pas indispensable, puisqu'elle ne change pas les valeurs de contraintes dans les armures qui sont déterminantes pour la conception des flexibles selon l'invention.

Les tableaux suivants permettent de montrer des exemples, nullement limitatifs, de conduites flexibles selon la présente invention :

### Exemple 1 : Structures avec voûte de diamètre intérieur 6 pouces (152,4 mm) et 8 pouces (203,2) : (Tableau 1).

Le flexible selon l'invention a les armures 3 et 4 fabriquées à partir d'un acier FM72 ayant une limite d'élasticité Rp0,2 de 1260 MPa, ce qui ne répond pas aux critères des fils dits « H₂S ». Cette structure permet d'atteindre des profondeurs de pose importantes, tout en ayant des contraintes en service dans les fils de renfort nettement inférieures au seuil de 200 MPa pour les armures 3 et 4 de traction fabriquées en acier non H₂S. L'acier 32C1 utilisé pour la voûte et les armures 1 et 2, dans cet exemple, a été trempé et revenu pour obtenir une limite d'élasticité Rp0,2 de l'ordre de 700 MPa qui lui confère la qualité de tenue à la corrosion dans une ambiance H₂S. L'utilisation d'acier non H₂S permet, soit un gain de poids de la conduite, soit une plus grande profondeur de pose, ou un coût moindre.

### Exemple 2 : Structure sans voûte (Tableau 2)

Les contraintes en service dans les fils d'armures 3 et 4 en acier non H₂S sont très faibles par rapport au seuil de 200 MPa.

**Tableau 1**

| **Couches** | **Flexible 6"** | **Flexible 8"** |
|---|---|---|
| Carcasse | Fil en T inox Rp0,2=650 MPa Epaisseur 9 mm. | Fil en T inox Rp0,2=650 Mpa Epaisseur 10 mm. |
| Gaine | Epaisseur 6,5 mm. | Epaisseur 6 mm. |
| Voûte | Fil zéta, acier 32C1 Rp0,2=700 MPa Epaisseur 8 mm. | Fil T, acier 30CD4 Rp0,2=650 Mpa Epaisseur 12 mm. |
| Armures 1- angle +35° | Fil plat, acier 32C1 Rp0,2=700 MPa Epaisseur 7 mm. | Fil plat, acier 32C1 Rp0,2=700 MPa Epaisseur 7 mm. |
| Armures 2- angle -35° | Fil plat, acier 32C1 Rp0,2=700 MPa Epaisseur 7 mm. | Fil plat, acier 32C1 Rp0,2=700 MPa Epaisseur 7 mm. |
| Gaine intermédiaire | Epaisseur 5 mm. | Epaisseur 5 mm. |
| Armures 3- angle +25° | Fil plat, acier FM72 Rp0,2=1260 MPa Epaisseur 7 mm. | Fil plat, acier FM72 Rp0,2=1260 MPa Epaisseur 7 mm. |
| Armures 4- angle -25° | Fil plat, acier FM72 Rp0,2=1260 MPa Epaisseur 7 mm. | Fil plat, acier FM72 Rp0,2=1260 MPa Epaisseur 7 mm. |
| Gaine externe (6) | Epaisseur 6 mm. | Epaisseur 12 mm. |

| **Caractéristiques** | | |
|---|---|---|
| Diamètre interne | 6" (152,4 mm.) | 8" (203 mm.) |
| Diamètre externe | 284,5 mm. | 356,1 mm. |
| Poids vide dans l'air | 220,42 kg/m | 307,68 kg/m |
| Poids vide dans l'eau | 155,26 kg/m | 205,6 kg/m |
| Pression d'écrasement (collapse) | 323 bar | 315 bar |
| Profondeur de pose | 2791 m | 2560 m |
| Pression interne maxi. | 572 bar | 526 bar |
| Contraintes dans les armures dues à la pression de service | Voûte Zéta : 398 MPa | Voûte Zêta : 357 MPa |
| | Armure 1: 97 MPa | Armure 1: 105 MPa |
| | Armure 2 : 101 MPa | Armure 2 : 107 MPa |
| | Armure 3 : 23 MPa | Armure 3 : 46 MPa |
| | Armure 4 : 37 MPa | Armure 4 : 51 MPa |

**Tableau 2**

| **Couches** | **Flexible 6"** | **Flexible 8"** |
|---|---|---|
| Carcasse | Fil en T inox Rp0,2=650 MPa Epaisseur 10 mm. | Fil en T inox Rp0,2=650 Mpa Epaisseur 14 mm. |
| Gaine | Epaisseur 6,5 mm. | Epaisseur 6,5 mm. |
| Armures 1 angle +55° | Fil, acier 32C1 Rp0,2=700 MPa Epaisseur 7 mm. | Fil, acier 32C1 Rp0,2=700 Mpa Epaisseur 7 mm. |
| Armures 2 angle -55° | Fil, acier 32C1 Rp0,2=700 MPa Epaisseur 7 mm. | Fil, acier 32C1 Rp0,2=700 Mpa Epaisseur 7 mm. |
| Gaine intermédiaire | Epaisseur 5 mm. | Epaisseur 5 mm. |
| Armures 3 angle +25° | Fil plat, acier FM72 Rp0,2=1260 MPa Epaisseur 5,5 mm. | Fil plat, acier FM72 Rp0,2=1260 MPa Epaisseur 7 mm. |
| Armures 4 angle -25° | Fil plat, acier FM72 Rp0,2=1260 MPa Epaisseur 5,5 mm. | Fil plat, acier FM72 Rp0,2=1260 MPa Epaisseur 7 mm. |
| Gaine externe (13) | Epaisseur 6 mm. | Epaisseur 6 mm. |

| **Caractéristiques** | | |
|---|---|---|
| Diamètre interne | 6" (152,4 mm.) | 8" (203,2 mm.) |
| Diamètre externe | 261,9 mm. | 328,30 mm. |
| Poids vide dans l'air | 166,48 kg/m | 254,44 kg/m |
| Poids vide dans l'eau | 111,26 kg/m | 167,67 kg/m |
| Pression d'écrasement (collapse) | 305 bar | 334 bar |
| Profondeur de pose | 2691 m | 2780 m |
| Pression interne maxi. | 610 bar | 477 bar |
| Contraintes dans les armures dues à la pression de service. | Armure 1 : 385 MPa | Armure 1 : 384 MPa |
| | Armure 2 : 345 MPa | Armure 2 : 356 MPa |
| | Armure 3 : 0 MPa | Armure 3 : 0 MPa |
| | Armure 4 : 15 MPa | Armure 4 : 9 MPa |

Les structures données ici en exemple ont été calculées selon les règles connues et les coefficients de sécurité usuels et recommandés par la norme API Specification 17J. On pourra se référer aux documents suivants :
- « Calculation of stresses and slip in structural layers of unbonded flexible pipes », Feret, J.J., Bournazel,C.L., Journal of Offshore Mechanics and Artic Engineering, Vol. 109, pp. 263-269, 1987.
- « On the axial-torsional structural behaviour of flexible pipes, umbilicals and marine cables », Witz, J.A. Tan, Z, Journal of marine Structures, 1992.
- « Handbook on design and operation of flexible pipes », Berge and al. Sintef Report n°STF70-A920006, 1992.

Pour confirmer les avantages des structures de la présente invention, il faut vérifier que l'éventuelle dégradation par un milieu H₂S des armures en acier non H₂S, dont les contraintes en service sont inférieures à un niveau déterminé, est compatible avec les impératifs de manutention des conduites (pose et relevage), de résistance en service, et de sécurité.

Deux types de risque de fragilisation par l'hydrogène (FPH) en milieu H₂S ont ainsi été étudiés
a) la sensibilité à la fissuration sous contrainte SSCC, sous un faible niveau de contrainte,
b) la sensibilité à la fissuration induite par l'hydrogène (HIC) et le comportement mécanique résiduel en cas de cloquage (blistering).

L'étude a porté sur les deux nuances d'acier à hautes caractéristiques mécaniques utilisés pour les armures 3 et 4 des tableaux 1 et 2 :
- un acier au carbone FM72 brut de laminage,
- un acier faiblement allié 32C1 à l'état trempé et seulement détensionné pour obtenir les caractéristiques mécaniques ci-après.

La composition chimique de ces nuances est indiquée dans le tableau ci-dessous :

| Composition chimique des aciers étudiés (10⁻³ %) | | | | | | | | | | | |
|---|---|---|---|---|---|---|---|---|---|---|---|
| Nuance | Coulée | C | Mn | Si | P | S | Cr | Ni | Al | Cu | Mo |
| FM72 | G46796 | 630 | 639 | 184 | 7 | 9 | 55 | 41 | 29 | 32 | 8 |
| 32C1 | G42329 | 326 | 752 | 184 | 6 | 13 | 338 | 34 | 44 | 35 | 13 |

Leurs propriétés mécaniques ont été déterminées en traction et les résultats obtenus sont les suivants :

| Nuance | Rp0,2 (MPa) | Rm(Mpa) |
|---|---|---|
| FM72 | 1241 | 1462 |
| 32C1 | 1002 | 1118 |

Ces caractéristiques de résistance mécanique sont entre 30 et 70% supérieures à celles des aciers au carbone et faiblement alliés utilisables pour des applications en milieu H₂S selon les critères définis plus haut.

Des essais pour déterminer leur sensibilité à la FPH ont été conduits en milieu H₂S, selon les recommandations des normes d'essai de la NACE (TM0177 et TM0284). Pour ce faire, des éprouvettes ont été prélevées dans les fils fournis, par usinage symétrique sur toutes les faces. Leur section finale était de 13x3,3 (mm) pour le FM72 et de 11x4 (mm) pour le 32C1.

La résistance à la SSCC a été mesurée sur des éprouvettes de longueur 150 mm et conformément à la procédure TM0177-96, sous une charge de 200 MPa qui est très supérieure aux contraintes en service calculées (tableaux 1 et 2).

Pour étudier la sensibilité HIC, la méthode décrite dans la norme TM0284 a été appliquée, en utilisant comme milieu de l'eau de mer synthétique :
- à pH=5, comme décrit dans la procédure TM0284-87,
- à pH=3 après acidification, selon la nouvelle version de la norme TM0284-96.

Après essais, les éprouvettes ayant effectuées les tests HIC et SSCC ont fait l'objet :
a) d'un examen par contrôle ultrasonore, dans le but de détecter et de quantifier l'endommagement produit (blisters),
b) d'un essai de traction pour mesurer les propriétés mécaniques résiduelles, malgré cet endommagement éventuel (sauf en cas de rupture lors du test SSCC).

### A) Comportement à la fissuration sous contrainte SSCC

Le tableau ci-dessous reprend les résultats des tests SSCC sous 200 MPa ainsi que ceux du contrôle ultrasonore et des essais de traction ultérieurs.

**Tableau 3 :**

| Résultats des essais SSC selon la NACE TM0177-96 | | | | | | |
|---|---|---|---|---|---|---|
| Nuance | pH de la solution (début/fin) | Rupture SSC (durée) | Contrôle Ultra Son (cloques*) | Surface affectée (%) | Propriétés mécaniques après test (MPa) | |
| | | | | | Rp0,2 | Rm |
| FM72 | 2,75/3,7 | Non | nombreuses | > 50 | 1189 (-4,2%) | 1325 (-9,4%) |
| 32C1 | 2,7/3,5 | Oui (≤6 j) | 2 à 3 | 20 | - | |
| 32C1 | 5,25/4,8 | Non | RAS | 0 | 1001 (-0,1%) | 1083 (-3,1%) |

| | | | | | | |
|---|---|---|---|---|---|---|
| *quantité par éprouvette | | | | | | |

L'acier 32C1 est très fragilisé en milieu H2S à pH faible (≤ 3), en dépit du modeste taux de chargement appliqué (20% de Rp0,2), et sa rupture intervient alors très rapidement. Dans l'état de traitement étudié, il est donc inapte à l'application visée en milieu très acide.

En revanche, pour un milieu moins sévère (pH ≈ 5), non seulement le 32C1 subit le test avec succès, mais encore il paraît en ressortir sans altération mesurable. Ainsi, le contrôle ultrasonore a révélé une excellente résistance au cloquage et les propriétés mécaniques sont elles aussi inaltérées.

Le FM72 brut de laminage affiche une grande sensibilité au cloquage en milieu H₂S. Néanmoins, aucune rupture n'a été observée au cours des tests à pH=3 et sa limite d'élasticité résiduelle se situe à plus de 95% de la valeur initiale.

Compte-tenu des critères de dimensionnement des structures de flexible (efforts maximum exercés sur les armures de pose bien inférieurs à la limite d'élasticité), un fil d'armure en FM72 brut de laminage, même endommagé est apte à permettre le relevage d'une conduite selon l'invention.

### B) Comportement à la fissuration induite HIC

Les résultats obtenus concernant l'endommagement HIC et les caractéristiques résiduelles en traction sont présentés dans le tableau 4 ci-dessous :

**Tableau 4 :**

| Résultats des essais HIC selon la NACE TM0284 | | | | | | |
|---|---|---|---|---|---|---|
| Nuance | Procédure NACE | pH du milieu | Contrôle Ultra Son (cloques*) | Surface affectée (%) | Propriétés mécaniques après test (MPa) | |
| | | | | | Rp0,2 | Rm |
| FM72 | TM0284/87 | 4,8 | nombreuses | > 50 | 1170 (-5,7%) | 1408(-3,7%) |
| FM72 | TM0284/96 | 2,8 | nombreuses | > 50 | 1168 (-5,9%) | 1357 (-7,2%) |
| 32C1 | TM0284/87 | 4,8 | 1 | 0,95 | 990 (-1,2%) | 1105 (-1,2%) |
| 32C1 | TM0284/96 | 2,8 | 6 à 9 | 16,3 | 1001 (-0,1%) | 1098 (-1,8%) |

| | | | | | | |
|---|---|---|---|---|---|---|
| *quantité par éprouvette | | | | | | |

Les résultats obtenus montrent que les deux aciers à haute résistance étudiés sont sensibles à l'endommagement par l'hydrogène. Cette sensibilité est particulièrement élevée dans le cas du FM72 qui présente un taux de cloquage très élevé, y compris pour le pH le moins acide. Pour le 32C1, ce taux de cloquage est nettement plus faible et varie avec l'acidité du milieu.

La mauvaise tenue HIC de ces aciers n'est pas une surprise et ce résultat pouvait être aisément anticipé compte tenu de leur état de traitement et du niveau de résistance mécanique résultant associé. En dépit de la présence de cloques, la limite d'élasticité et la résistance à la traction de la nuance FM72 sont assez peu affectées et celles du 32C1 peuvent être considérées comme inchangées.

Dans un cas comme dans l'autre, de telles baisses de propriétés peuvent être prises en compte au niveau de la conception initiale.

Les essais HIC réalisés ont montré que les aciers à haute résistance testés (en particulier le FM72) sont sensibles à un endommagement de type cloquage, même pour des pH modérément acides. Cet acier n'est donc pas « H₂S » selon les critères décrits.

Toutefois, les défauts induits affectent très peu les propriétés mécaniques de traction, en particulier la limite d'élasticité. Cela signifie que les armures en question peuvent continuer à remplir convenablement leur fonction lors d'opérations telles que le relevage ou une nouvelle pose du flexible.

Les essais SSCC sous faible charge (inférieure à 200 Mpa) ont permis de mettre en évidence les risques de rupture en service par fissuration sous contrainte. Leurs résultats indiquent que l'acier 32C1 à l'état trempé-détensionné ne peut être retenu dans le cas de pH très bas (milieu NACE TM0177) mais qu'il pourrait l'être pour des milieux moins acides (limite de pH à déterminer). A pH=5 par exemple, il ne connaît aucun endommagement et ses propriétés de traction sont inaltérées.

Dans le cas du FM72 brut de laminage, une utilisation jusqu'à pH=3 peut être envisagée, malgré une microstructure fortement cloquée. Non seulement, le faible taux de chargement appliqué ne provoque pas de rupture mais encore la limite d'élasticité apparente n'est abaissée que d'environ 5% après test. Ainsi, de telles armures devraient autoriser sans difficulté des opérations de manutention sur champ, même après plusieurs années de fonctionnement.

Ainsi, l'utilisation d'aciers non H₂S, notamment dotés de caractéristiques mécaniques élevées (Rp0,2> 700MPa) et sensibles à la fissuration induite par l'hydrogène (HIC) pour les armures destinées à résister aux efforts de pose d'une conduites du type flowline destinées à un environnement H₂S est possible dans la mesure où en service les contraintes de chargement restent faibles et inférieures à un seuil que l'on peut déterminer, par exemple expérimentalement pour chaque acier.

## Revendications

1. Conduite tubulaire flexible de type "flow live" pour le transport de fluides sous pression contenant de l'H₂S, ladite conduite comportant de l'intérieur vers l'extérieur une carcasse, une gaine interne d'étanchéité, au moins une nappe d'armures en acier de résistance aux efforts induits par la différence de pression interne/externe, au moins une nappe d'armures en acier de résistance à la traction enroulées en spirale selon un angle inférieur à 45° par rapport à l'axe de la conduite, **caractérisée en ce que** ladite nappe d'armures de résistance aux efforts induits par la différence de pression interne/externe (3 ; 9, 10 ;16) est en acier déterminé pour respecter les critères de tenue à l'H₂S, et **en ce qu'**au moins une des nappes d'armures de résistance à la traction (5, 4 ; 11, 12; 18, 19) est fabriquée à partir de fils d'acier ne respectant pas les critères de tenue à l'H₂S.

2. Conduite selon la revendication 1, **caractérisée en ce qu'**elle comporte une gaine intermédiaire (17) sur l'extérieur de laquelle, par rapport à la l'intérieur de la conduite, est disposée ladite nappe d'armures de résistance à la traction (18, 19) fabriquées à partir de fils d'acier ne respectant pas les critères de tenue à l'H₂S.

3. Conduite selon l'une des revendications précédentes, **caractérisée en ce que** ladite nappe d'armure en acier de résistance aux efforts induits par la différence de pression interne/externe comporte au moins des fils de renfort (3) enroulés selon un angle proche de 90° par rapport à l'axe de la conduite.

4. Conduite selon l'une des revendications 1 ou 2, **caractérisée en ce que** ladite nappe d'armure en acier de résistance aux efforts induits par la différence de pression interne/externe comporte au moins des fils de renfort (9, 10) enroulés selon un angle proche de 55°.

5. Conduite selon la revendication 4, **caractérisée en ce qu'**elle comporte en combinaison, de l'intérieur vers l'extérieur, une carcasse (7), une gaine d'étanchéité (8), deux nappes d'armures croisées à 55° (9, 10) en acier dit « H₂S », deux nappes d'armures (11, 12) croisées à un angle inférieur à 40° en acier non H₂S.

6. Conduite selon la revendication 3, **caractérisée en ce qu'**elle comporte en combinaison, de l'intérieur vers l'extérieur, une carcasse (1), une gaine d'étanchéité (2), une voûte (3) en fils spiralés à une angle proche de 90° et deux nappes d'armures (4, 5) croisées à un angle inférieur à 40° en acier dit « H₂S », et deux nappes d'armures croisées à un angle inférieur à 40° en acier non H₂S.

7. Méthode utilisée pour la conception d'une conduite flexible de type « flowline » pour le transport de fluides sous pression contenant de l'H₂S une fois allongée au fond de la mer, ladite conduite comportant de l'intérieur vers l'extérieur une carcasse, une gaine interne d'étanchéité, au moins une nappe d'armures en acier de résistance aux efforts induits par la différence de pression interne/externe, au moins une nappe d'armures en acier de résistance à la traction enroulées en spirale selon un angle inférieur à 45° par rapport à l'axe de la conduite, **caractérisée en ce que** ladite nappe d'armures de résistance aux efforts induits par la différence de pression interne/externe est en acier déterminé pour respecter les critères de tenue à l'H₂S et **en ce que** ladite méthode comporte les étapes suivantes :
■ on détermine un niveau de contrainte dans un acier non H₂S pouvant être utilisé pour au moins une des nappes d'armures de résistance à la traction, niveau en deçà duquel l'acier conserve en ambiance H₂S une résistance mécanique suffisante pour relever ladite conduite,
■ on dimensionne ladite nappe d'armures en acier de résistance à la traction enroulées en spirale selon un angle inférieur à 45° par rapport à l'axe de la conduite, pour que les contraintes en condition de pression de service dans les fils de ladite nappe de traction soient inférieures audit niveau,
■ on fabrique ladite nappe d'armures en acier de résistance à la traction enroulées en spirale selon un angle inférieur à 45° par rapport à l'axe de la conduite, à partir dudit acier ne respectant pas les critères de tenue à l'H₂S.

## Patentansprüche

1. Flexible röhrenförmige Flowline-artige Leitung zum Weiterleiten von unter Druck stehenden H₂S-haltigen Flüssigkeiten, wobei die besagte Leitung von innen nach außen ein Gerippe, einen inneren Dichtungsmantel, wenigstens eine gegen die durch den Innen-/Außendruckunterschied hervorgerufenen Beanspruchungen beständige Stahlarmierungsschicht, wenigstens eine zugfeste Stahlarmierungsschicht, deren Drähte mit einem Winkel von weniger als 45° zu der Leitungsachse spiralförmig gewickelt sind, beträgt, **dadurch gekennzeichnet, daß** die besagte gegen die durch den Innen-/Außendruckunterschied hervorgerufenen Beanspruchungen beständige Stahlarmierungsschicht (3; 9, 10; 16) aus einem den H₂S-Festigkeitskriterien entsprechenden bestimmten Stahl besteht, und daß wenigstens eine der zugfesten Stahlarmierungsschichten (5, 4; 11, 12; 18, 19) aus Stahldrähte, die den H₂S-Festigkeitskriterien nicht entsprechen, besteht.

2. Leitung gemäß Anspruch 1, **dadurch gekennzeichnet, daß** sie einen zwischenliegenden Mantel (17) beträgt, auf dessen Außenseite, in bezug auf die Innenseite der Leitung, die besagte zugfeste Stahlarmierungsschicht (18, 19) aus Stahldrähte, die den H₂S- Festigkeitskriterien nicht entsprechen, angeordnet ist.

3. Leitung gemäß irgendeinem der vorstehenden Ansprüche, **dadurch gekennzeichnet, daß** die besagte gegen die durch den Innen-/ Außendruckunterschied hervorgerufenen Beanspruchungen beständige Stahlarmierungsschicht wenigstens Verstärkungsdrähte (3) beträgt, die mit einem Winkel in der Nähe von 90° zu der Leitungsachse gewickelt sind.

4. Leitung gemäß Anspruch 1 oder 2, **dadurch gekennzeichnet, daß** die besagte gegen die durch den Innen-/ Außendruckunterschied hervorgerufenen Beanspruchungen beständige Stahlarmierungsschicht wenigstens Verstärkungsdrähte (9, 10) beträgt, die mit einem Winkel in der Nähe von 55° gewickelt sind.

5. Leitung gemäß Anspruch 4, **dadurch gekennzeichnet, daß** sie von innen nach außen ein Gerippe (7), einen Dichtungsmantel (8), zwei um 55° quergewickelten Armierungsschichten (9, 10) aus sogenanntem « H₂S »-Stahl und zwei mit einem Winkel von weniger als 40° quergewickelten Armierungsschichten (11, 12) aus nicht-H₂S-Stahl beträgt.

6. Leitung gemäß Anspruch 3, **dadurch gekennzeichnet, daß** sie von innen nach außen ein Gerippe (1), einen Dichtungsmantel (2), eine Druckschicht (3) deren Drähte mit einem Winkel in der Nähe von 90° gewickelt sind, zwei mit einem Winkel von weniger als 40° quergewickelten Armierungsschichten (4, 5) aus « H₂S »-Stahl und zwei mit einem Winkel von weniger als 40° quergewickelten Armierungsschichten aus nicht-H₂S-Stahl beträgt.

7. Verfahren zur Herstellung einer auf dem Seeboden liegenden flexiblen röhrenförmigen Flowline-artigen Leitung zum Weiterleiten von unter Druck stehenden H₂S-haltigen Flüssigkeiten, wobei die besagte Leitung von innen nach außen ein Gerippe, einen inneren Dichtungsmantel, wenigstens eine gegen die durch den Innen-/Außendruckunterschied hervorgerufenen Beanspruchungen beständige Stahlarmierungsschicht, wenigstens eine zugfeste Stahlarmierungsschicht, deren Drähte mit einem Winkel von weniger als 45° zu der Leitungsachse spiralförmig gewickelt sind beträgt, **dadurch gekennzeichnet, daß** die besagte gegen die durch den Innen- /Außendruckunterschied hervorgerufenen Beanspruchungen beständige Stahlarmierungsschicht aus einem den H₂S-Festigkeitskriterien entsprechenden bestimmten Stahl besteht, und daß das besagte Verfahren folgende Schritte einschließt:
- ein Beanspruchungsniveau wird in einem nicht-H₂S-Stahl, der für wenigstens eine der zugfesten Stahlarmierungsschichten verwendet werden kann, bestimmt, unterhalb welches der Stahl in einer H₂S-Umgebung eine genügende mechanische Festigkeit behält um die besagte Leitung aufheben zu können,
- die besagte zugfeste Stahlarmierungsschicht, deren Drähte mit einem Winkel von weniger als 45° zu der Leitungsachse spiralförmig gewickelt sind, wird so bemessen, daß die Beanspruchungen unter den Betriebsdruckbedingungen in den Drähten der besagten zugfesten Schicht unter dem besagten Niveau liegen,
- die besagte zugfeste Stahlarmierungsschicht, deren Drähte mit einem Winkel von weniger als 45° zu der Leitungsachse spiralförmig gewickelt sind, wird mittels des besagten den H₂S-Festigkeitskriterien nicht entsprechenden Stahls hergestellt.

## Claims

1. A flexible tubular pipe of flowline type intended to carry fluids under pressure containing H₂S, said pipe comprising, from the inside to the outside, a body, an internal sealing sheath, at least one steel armouring layer withstanding stresses induced by the inside/outside pressure difference, at least one tension-resisting steel armouring layer spirally wound at an angle less than 45° in relation to the axis of the pipe, **characterized in that** said armouring layer withstanding stresses induced by the inside/outside pressure difference (3 ; 9, 10 ; 16) is made of a determined steel meeting H₂S resistance criteria, and **in that** at least one of the tension-resisting armouring layers (5,4; 11, 12; 18, 19) is made from steel wires that do not meet H₂S resistance criteria.

2. A pipe as claimed in claim 1, **characterized in that** it comprises an intermediate sheath (17) on the outside of which, in relation to the inside of the pipe, said tension-resisting armouring layer (18, 19) made from steel wires that do not meet H₂S resistance criteria is arranged.

3. A pipe as claimed in any one of the previous claims, **characterized in that** said steel armouring layer withstanding stresses induced by the inside/outside pressure difference comprises at least reinforcing wires (3) wound at an angle close to 90° in relation to the axis of the pipe.

4. A pipe as claimed in any one of claims 1 or 2, **characterized in that** said steel armouring layer withstanding stresses induced by the inside/outside pressure difference comprises at least reinforcing wires (9, 10) wound at an angle close to 55°.

5. A pipe as claimed in claim 4, **characterized in that** it comprises in combination, from the inside to the outside, a body (7), a sealing sheath (8), two armouring layers crossed at 55 ° (9, 10) made of steel referred to as « H₂S » steel, two armouring layers (11, 12) crossed at an angle less than 40° made of non H₂S steel.

6. A pipe as claimed in claim 3, **characterized in that** it comprises in combination, from the inside to the outside, a body (1), a sealing sheath (2), a pressure layer (3) made of wires spirally wound at an angle close to 90°, two armouring layers (4, 5) crossed at an angle less than 40° made of steel referred to as « H₂S » steel, and two armouring layers crossed at an angle less than 40° made of non H₂S steel.

7. A method used for designing a flowline type flexible pipe intended to carry fluids under pressure containing H₂S once laid on the sea bottom, said pipe comprising, from the inside to the outside, a body, an internal sealing sheath, at least one steel armouring layer withstanding stresses induced by the inside/outside pressure difference, at least one tension-resisting steel armouring layer spirally wound at an angle less than 45° in relation to the axis of the pipe, **characterized in that** said steel armouring layer withstanding stresses induced by the inside/outside pressure difference is made of a determined steel allowing to meet H₂S resistance criteria and **in that** said method comprises the following stages :
- determining a stress level in a non H₂S steel that can be used for at least one of the tension-resisting armouring layers, a level below which the steel retains a sufficient mechanical strength to allow said pipe to be lifted in a H₂S ambience,
- dimensioning said tension-resisting steel armouring layer spirally wound at an angle less than 45° in relation to the axis of the pipe so that the stresses under operating pressure conditions in the wires of said tension layer are below said level,
- manufacturing said tension-resisting steel armouring layer spirally wound at an angle less than 45° in relation to the axis of the pipe from said steel that does not meet H₂S resistance criteria.
